(19) Europäisches Patentamt / European Patent Office / Office européen des brevets

(11) **EP 4 080 611 A1**

(12) **EUROPEAN PATENT APPLICATION**
published in accordance with Art. 153(4) EPC

(43) Date of publication:
26.10.2022 Bulletin 2022/43

(21) Application number: 20904145.8

(22) Date of filing: 16.12.2020

(51) International Patent Classification (IPC):
*H01M 4/38* (2006.01)      *H01M 10/0525* (2010.01)
*H01M 10/44* (2006.01)

(52) Cooperative Patent Classification (CPC):
H01M 4/38; H01M 10/052; H01M 10/0525;
H01M 10/44; Y02E 60/10; Y02P 70/50

(86) International application number:
PCT/JP2020/047004

(87) International publication number:
WO 2021/125232 (24.06.2021 Gazette 2021/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.12.2019 JP 2019229604

(71) Applicants:
• SUMITOMO CHEMICAL COMPANY, LIMITED
Tokyo 103-6020 (JP)
• Tohoku University
Sendai-shi, Miyagi 980-8577 (JP)

(72) Inventors:
• YAMAGUCHI, Takitaro
Tsukuba-shi, Ibaraki 300-3294 (JP)
• MATSUMOTO, Shingo
Tsukuba-shi, Ibaraki 300-3294 (JP)
• HOSHIKAWA, Hiroaki
Niihama-shi, Ehime 792-8521 (JP)
• ICHITSUBO, Tetsu
Sendai-shi, Miyagi 980-8577 (JP)
• LI, Hongyi
Sendai-shi, Miyagi 980-8577 (JP)

(74) Representative: Vossius & Partner
Patentanwälte Rechtsanwälte mbB
Siebertstraße 3
81675 München (DE)

(54) **LITHIUM SECONDARY BATTERY AND BATTERY SYSTEM**

(57) A lithium secondary battery includes: a metal anode capable of being doped and dedoped with lithium ions; a cathode capable of being doped and dedoped with the lithium ions; and an electrolyte disposed between the metal anode and the cathode, in which the metal anode has a plate shape, and is composed of lithium and a base material in which the lithium is solid-dissolved, the metal anode in a discharged state has a layer of a substitutional solid solution, the substitutional solution has a structure in which a part of a crystal lattice of a metal constituting the base material is substituted with the lithium, and the layer is located on a surface of the metal anode opposite to a surface facing the cathode or inside the metal anode.

FIG. 2

EP 4 080 611 A1

**Description**

[Technical Field]

The present invention relates to a lithium secondary battery and a battery system.
Priority is claimed on Japanese Patent Application No. 2019-229604, filed December 19, 2019, the content of which is incorporated herein by reference.

[Background Art]

Attempts at putting chargeable lithium secondary batteries into practical use not only for small-sized power sources in mobile phone applications, notebook personal computer applications, and the like but also for medium-sized or large-sized power sources in automotive applications, power storage applications, and the like have already been underway.
Conventionally, as for an anode constituting the lithium secondary battery, studies have been made to improve battery performance using a material having a larger theoretical capacity than graphite, which is a conventional anode material. As such a material, a metallic material capable of occluding and releasing lithium ions like graphite is attracting attention. In the following description, an anode formed of a metallic material may be referred to as a "metal anode".
For example, Patent Document 1 discloses a nonaqueous electrolyte battery that uses a clad material for joining a base layer unalloyable with lithium with an aluminum layer forming an alloy with lithium as a metal anode.

[Citation List]

[Patent Document]

[Patent Document 1] Japanese Unexamined Patent Application, First Publication No. 2017-195028

[Summary of Invention]

[Technical Problem]

As application fields of the lithium secondary batteries expand, further improvement of cycle characteristics is required. The lithium secondary batteries using a metal anode have room for improvement in cycle characteristics. Further, not only in a lithium secondary battery but also in a battery system including a battery cell of the lithium secondary battery, improvement in cycle characteristics is similarly required.
The "cycle characteristic" refers to a discharge capacity retention rate upon repeatedly charging and discharging. A high discharge capacity retention rate when the secondary battery is repeatedly charged and discharged is evaluated as "good cycle characteristics".
Moreover, a competition for cost reduction is keen in the fields of the lithium secondary batteries. Therefore, it has been required for the metal anode not to use a clad material which is one of factors for increasing the cost.
The present invention has been made in view of such circumstances, and an object of the present invention is to provide a lithium secondary battery having good cycle characteristics without using a clad material, and a battery system.

[Solution to Problem]

When the inventors examined the above problems, they found that in the lithium secondary battery having the metal anode, the anode may be collapsed during discharge and damaged. The inventors considered that such damage to the anode causes deterioration in cycle characteristics of the lithium secondary battery. The inventors also considered that the cycle characteristics could be deteriorated by the same mechanism in the battery system including the battery cell of the lithium secondary battery.
Based on the above inferences, the inventors considered that it is possible to realize a lithium secondary battery and a battery system having cycle characteristics by suppressing damage to the anode, and as a result of intensive studies, completed the present invention.
In order to solve the above problems, the present invention includes the following aspects.

[1] A lithium secondary battery including: a metal anode capable of being doped and dedoped with lithium ions; a cathode capable of being doped and dedoped with the lithium ions; and an electrolyte disposed between the metal anode and the cathode, in which the metal anode has a plate shape, and is composed of lithium and a base material in which the lithium is solid-dissolved, the metal anode in a discharged state has a layer of a substitutional solid solution, the substitutional solid solution has a structure in which a part of a crystal lattice of a metal constituting the base material is substituted with the lithium, and the layer is located on a surface of the metal anode opposite to a surface facing the cathode or inside the metal anode.

[2] The lithium secondary battery according to [1], in which the base material contains one or more metals selected from the group consisting of aluminum, silicon, tin, and lead.

[3] A battery system including: a lithium secondary battery unit; and a control unit, in which the lithium secondary battery unit includes a metal anode capable of being doped and dedoped with lithium ions, a cathode capable of being doped and dedoped with the lithium ions, and an electrolyte disposed between the metal anode and the cathode, the metal anode has a plate shape, and is composed of lithium and a base material in which the lithium is solid-dissolved, the metal anode in a discharged state has a layer of a substitutional solid solution, the substitutional solid solution has a structure in which a part of a crystal lattice of a metal constituting the base material is substituted with the lithium, and the control unit controls the operating voltage of the lithium secondary battery unit to be a voltage at which the lithium ions are not deintercalated from the substitutional solid solution.

[4] The battery system according to [3], in which the base material contains one or more metals selected from the group consisting of aluminum, silicon, tin, and lead.

[Advantageous Effects of Invention]

According to the present invention, it is possible to provide a lithium secondary battery having good cycle characteristics and a battery system.

[Brief Description of Drawings]

Fig. 1 is a schematic view showing an example of a lithium secondary battery according to an embodiment.
Fig. 2 is an SEM photograph in a cross section of a metal anode 3 in a thickness direction.
Fig. 3 is an SEM photograph in a cross section of the metal anode 3 in the thickness direction.
Fig. 4 is a Li mapping image obtained by TOF-SIMS in the cross section of the metal anode 3 in the thickness direction.
Fig. 5 is a schematic view showing a crystal structure of a metal anode.
Fig. 6 is a schematic view showing a battery system according to a second embodiment.

[Description of Embodiments]

[First Embodiment]

[Lithium Secondary Battery]

Hereinafter, a lithium secondary battery according to the present embodiment will be described with reference to the drawings. In all of the following drawings, in order to make it easy to see the drawings, dimension, scale, and the like of each of the components have been modified as appropriate.

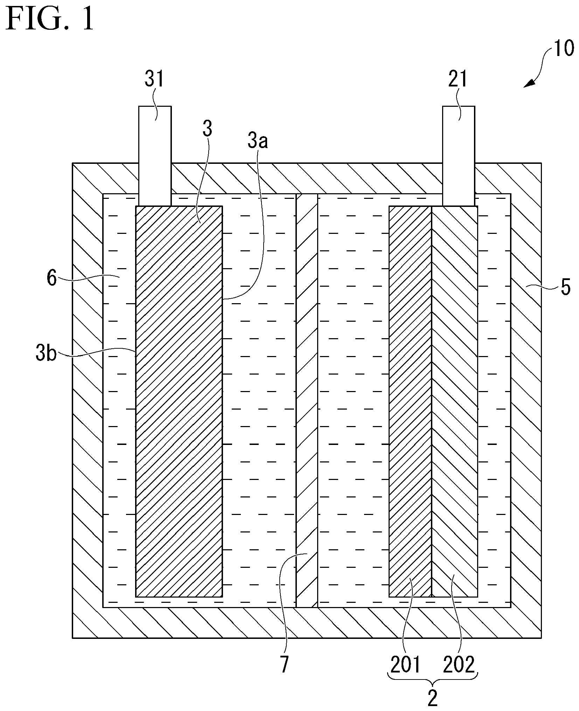

Fig. 1 is a schematic view showing an example of a lithium secondary battery according to the present embodiment. A lithium secondary battery 10 includes a cathode 2 capable of being doped and dedoped with lithium ions, a metal anode 3 capable of being doped and dedoped with the lithium ions, and an electrolytic solution 6 disposed between the metal anode 3 and the cathode 2.

Further, the lithium secondary battery 10 includes a separator 7 preventing physical contact between the cathode 2 and the metal anode 3, and a battery exterior 5 housing the cathode 2, the metal anode 3, the electrolytic solution 6, and the separator 7.

Hereinafter, each component will be described in order.

(Metal Anode)

The metal anode 3 has a plate shape and is composed of lithium and a base material in which lithium is solid-dissolved.

The "base material" is a metallic material constituting a balance obtained by removing lithium from the entire metal anode 3. As will be described later, the base material may be a simple substance of metal or an alloy. The base material may contain inevitable impurities such as production residues that are inevitably mixed in a refining step.

In the present embodiment, the "plate shape (plate-shaped)" means a three-dimensional shape having at least two facing main surfaces. Each of the two main surfaces may include not only a mathematical plane but also a certain curved surface in a part thereof, and may have an unevenness generated in production of the metal anode 3. In this sense, the plate shape is not limited to a thin rectangular parallelepiped.

In the "plate-shaped" metal anode 3, the distance between the two facing main surfaces described above corresponds to a thickness of the metal anode 3. In the metal anode 3, the length in a first direction (for example, a width direction) orthogonal to the thickness direction is longer than the thickness. In addition, in the metal anode 3, the length in a second direction (for example, the length direction) orthogonal to each of the thickness direction and the first direction is longer than the thickness.

Various values can be adopted for the thickness of the metal anode 3. The plate-shaped metal anode 3 includes a thin film-shaped electrode having flexibility that is easy to curve or bend, and a thin plate-shaped electrode that is difficult to curve or bend.

The thickness of the metal anode 3 is preferably 5 $\mu$m or more, more preferably 6 $\mu$m or more, and still more preferably 7 $\mu$m or more. In addition, the thickness of the metal anode 3 is preferably 200 $\mu$m or less, more preferably 190 $\mu$m or less, and particularly preferably 180 $\mu$m or less.

The upper limit value and lower limit value of the thickness of the metal anode 3 described above can be randomly combined together.

The thickness of the metal anode 3 is preferably 5 $\mu$m or more and 200 $\mu$m or less, more preferably 6 $\mu$m or more and 190 $\mu$m or less, and particularly preferably 7 $\mu$m or more and 180 $\mu$m or less.

The thickness of the metal anode 3 may be measured using a thickness gauge or a caliper.

The thickness of the metal anode 3 means the average value when the thickness of the metal anode 3 is measured at five points.

The thickness of the metal anode 3 described above refers to the thickness of the metal anode 3 during discharge.

If the lithium secondary battery 10 is not assembled, the thickness of the metal anode 3 is obtained by measuring the thickness of the uncharged metal anode 3.

Moreover, the thickness of the metal anode 3 included in the lithium secondary battery 10 is obtained by measuring the thickness of the metal anode 3 that is taken out from the lithium secondary battery 10 after discharging the lithium secondary battery 10. The "during discharge" refers to a case in which the lithium secondary battery 10 is charged to a battery voltage of 4.2 V, and then discharged to a battery voltage at which a potential change of the anode is controlled to be less than 0.2 V.

In the metal anode 3, a surface 3a facing the cathode of the two planes functions as an anode active material.

In addition, in the metal anode 3, a surface 3b opposite to the surface 3a facing the cathode functions as a current collector.

That is, the metal anode 3 is a current collector integrated anode serving as the anode active material and the current collector. Therefore, the metal anode 3 does not require the current collector as a separate member.

When the anode active material is supported to the current collector of the separate member to produce the anode, the anode active material may be peeled off from the current collector and the anode may be damaged due to charging and discharging. On the other hand, the metal anode 3 has an advantage that the problem of peeling off the anode active material is unlikely to occur in the first place because the current collector and the anode active material are one member.

Moreover, the lithium secondary battery 10 having the metal anode 3 does not require a process of supporting the anode active material to the current collector in a manufacturing process.

The base material contains a metallic material capable of being doped and dedoped with lithium ions. The base material preferably contains one or more metals selected from the group consisting of aluminum, silicon, tin, and lead as a material.

Specific examples of the base material include high-purity aluminum, high-purity silicon, high-purity tin, and high-purity lead.

The base material is preferably high-purity aluminum. The high-purity aluminum refers to aluminum having a purity of 99% by mass or more. The purity of the high-purity aluminum is preferably 99.8% by mass or more, more preferably 99.9% by mass or more, still more preferably 99.95% by mass or more, and even still more preferably 99.99% by mass or more.

The purity of the base material can be confirmed by a solid emission spectrochemical analysis method.

The purity of the base material can be confirmed by an inductive coupled plasma (ICP) analysis method. For example, the purity of the base material can be measured using an ICP optical emission spectrometer (SPS3000, manufactured by SII NanoTechnology Inc.).

An example of the refining method for purifying aluminum to the above-described purity can include a segregation method and a three-Layer electrolysis method.

(Segregation Method)

The segregation method is a refining process that utilizes a segregation phenomenon when molten aluminum is easily solidified, and a plurality of methods thereof have been put into practical use. As for one form of the segregation method, there is a method of pouring molten aluminum into a container, and solidifying the refined aluminum from the bottom while heating and stirring the molten aluminum at the top while rotating the container. High-purity aluminum having a purity of 99% by mass or more can be obtained by the segregation method.

(Three-Layer electrolysis Method)

As one form of the three-Layer electrolysis method, there is a method in which first, an aluminum metal having a minimum aluminum content of 99% by mass or more is charged into an Al-Cu alloy layer, and the aluminum metal is then used as an anode in a molten state, and an electrolytic bath containing, for example, aluminum fluoride and barium fluoride are disposed thereon to precipitate high-purity aluminum on a cathode.

By the three-Layer electrolysis method, high-purity aluminum having a purity of 99.999% by mass or more can be obtained.

The refining method for highly purifying aluminum is not limited to the segregation method and the three-Layer electrolysis method, and other known methods such as a zone melting refining method and an ultra-high vacuum melting refining method may be used.

Moreover, the base material may be an alloy produced by intentionally adding another metal in a fraction of 8.0% by mass or less of the whole base material. Examples of another metal include one or more metals selected from the group consisting of Mg, Ni, Mn, Zn, Cd, and Ge.

When the base material is one or more metals selected from the group consisting of aluminum, tin, and lead, silicon can also be used as another metal.

The amount of another metal based on the whole base material is 8.0% by mass or less, preferably 2.0% by mass or less, and more preferably 1.0% by mass or less.

When another metal is added to the base material, the amount of another metal contained in the base material is preferably 0.01% by mass or more, more preferably 0.02% by mass or more, and still more preferably 0.05% by mass or more, and particularly preferably 0.1% by mass or more.

The upper limit value and lower limit value of the above-described amount of an additional metal described above can be randomly combined together. The amount of additional metal contained in the base material is preferably 0.01% by mass or more and 8.0% by mass or less, more preferably 0.02% by mass or more and 2.0% by mass or less, still more preferably 0.05% by mass or more and 1.0% by mass or less, and particularly preferably 0.1% by mass or more and 1.0% by mass or less.

When the metal constituting the base material is aluminum, the Vickers hardness of the base material is preferably 10 HV or more and 70 HV or less, more preferably 20 HV or more and 70 HV or less, and still more preferably 30 HV or more and 70 HV or less.

If the Vickers hardness is the upper limit value or less, it is presumed that a strain of a crystal structure of the base material when lithium is absorbed can be relaxed, and the crystal structure can be thus maintained. Therefore, the lithium secondary battery using the metal anode 3 can maintain a discharge capacity even when charging and discharging is repeated.

For the Vickers hardness, a value measured by the following method is used.

(Method for Measuring Vickers Hardness)

As an index of the hardness of the base material, the Vickers hardness (HV 0.05) is measured using a micro-Vickers hardness tester. The micro-Vickers hardness tester manufactured by Shimadzu Corporation can be used for the measurement.

The Vickers hardness is a value measured according to JIS Z2244: 2009 "Vickers hardness test-test method". The Vickers hardness is measured by pushing a diamond indenter of a square pyramid into a surface of a test piece of the base material, releasing a test force thereof, and then calculating the Vickers hardness from the diagonal length of a dent remaining on the surface.

The above standard stipulates that a hardness symbol is changed according to the test force. The hardness symbol of the base material in the present embodiment is a Micro Vickers hardness HV 0.05 when the test force is 0.05 kgf (= 0.4903 N).

Moreover, in the metal anode 3, the metallic material constituting the surface 3b is a substitutional solid solution obtained by substituting a part of a crystal lattice of the metallic material constituting the base material with lithium. The fact that the metallic material constituting the surface 3b is a substitutional solid solution can be confirmed by performing Li mapping on a cross section of the charged metal anode in the thickness direction by cross-sectional SEM-EDX observation and time-of-flight secondary ion mass spectrometry (TOF-SIMS).

The cross-sectional SEM observation can be performed by the following method.

(Method of Cross-Sectional SEM Observation Method And Method For Observing Metal Distribution State)

First, the metal anode 3 is processed inside a glove box that is controlled to have a moisture value of 1 ppm or less using a focused ion beam processing apparatus (model number: FB-2200, manufactured by Hitachi High-Technologies Corporation) to prepare a cross section.

Next, a scanning electron microscope image (SEM image) for the obtained cross section is obtained under the following conditions with the following scanning electron microscope.

In addition, a metal distribution state in the obtained cross section is observed under the following conditions using the following energy dispersive fluorescent X-ray analysis apparatus.

<Measurement Conditions>

Scanning electron microscope: field-emission scanning electron microscope (model number: SU-8230, manufactured by Hitachi High-Technologies Corporation)
Energy dispersive fluorescent X-ray analysis apparatus: X-MaxN (OXFORD INSTRUMENTS)
Acceleration voltage: 1 kV (during observation), 10 kV (during EDX)
Magnification: x700

The TOF-SIMS can be performed by the following method.

(TOF-SIMS Method)

First, the metal anode 3 is processed to prepare a cross section by the same method as during the cross-sectional SEM observation described above.

Next, the obtained cross section is observed under the following conditions using the following time-of-flight secondary ion mass spectrometer.

<Measurement Conditions>

Time-of-flight secondary ion mass spectrometer: TOF-SIMS V (manufactured by ION-TOF)
Primary ions: $^{209}Bi^{3+}$
Magnification: x700
Measurement range: about 200 $\mu$m $\times$ 200 $\mu$m
Detected secondary ions: Positive
Information depth: about 1 nm
Lower limit of detection: several 10 ppm to several 100 ppm

Fluctuation of the lower limit of detection is due to difference in observed atomic species.

Further, the crystal grain size of the metal anode 3 was confirmed by cross-sectional SIM observation.

The cross-sectional SIM observation can be performed by the following method.

(Method of Cross-Sectional SIM Observation)

First, a plate-shaped metal foil in an uncharged or charged state is processed inside the glove box that is controlled to have a moisture value of 1 ppm or less using the following focused ion beam processing apparatus to prepare a cross section. The cross section may be prepared under the same processing conditions as those in the above cross-sectional SEM observation.

Next, the obtained cross section is observed using the following focused ion beam processing apparatus.

<Measurement Conditions>

Focused ion beam processing observation apparatus: FB-2100 (manufactured by Hitachi High-Technologies Corporation)
Ion source: gallium liquid metal
Acceleration voltage: 40 kV
Magnification: x700

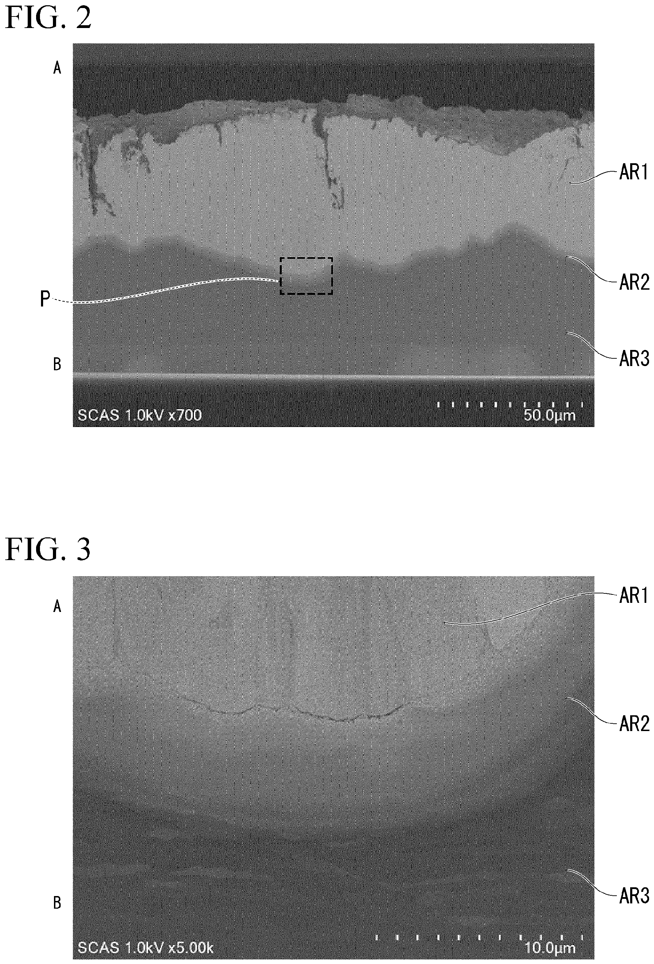

Figs. 2 to 4 are diagram showing results of observed cross sections of the charged metal anode in the thickness direction.

The metal anode observed in Figs. 2 to 4 was prepared as follows.

First, a lithium secondary battery was assembled using a metal anode whose base material is aluminum and lithium cobalt oxide as a counter electrode. The obtained lithium secondary battery was charged at room temperature with a constant-current constant-voltage charge with a charge current of 0.2 C to a voltage of 3.9 V, and then discharged at 0.2 C from 3.9 V to 3.0 V. An observation target in Figs. 2 to 4 was a metal anode that is taken out from the lithium secondary battery by disassembling the lithium secondary battery charged under the above conditions after 5 cycles with charging and discharging by setting the charging and the discharging as 1 cycle.

In Figs. 2 to 4, a reference sign A side is a side facing the counter electrode in the lithium secondary battery, and a reference sign B side is a side opposite to the counter electrode. In the metal anode, a surface on the reference sign A side corresponds to the surface 3a in Fig. 1, and a surface on the reference sign B side corresponds to the surface 3b in Fig. 1.

Figs. 2 and 3 are SEM photographs in the cross section of the metal anode 3 in the thickness direction. Fig. 2 is an enlarged photograph at a magnification of x700. Fig. 3 is an enlarged photograph having a magnification of x5000, and is an enlarged view of a portion represented by reference sign P in Fig. 2.

As shown in Figs. 2 and 3, when the cross section of the charged metal anode was observed by SEM, three layers having different contrasts could be confirmed. In Figs 2 and 3, the three layers are each represented as reference signs AR1, AR2, and AR3 from the reference sign A side. In the SEM photograph, the color of a region represented by the reference sign AR1 was the lightest, and the color of a region represented by the reference sign AR3 was the darkest. The region represented by the reference sign AR2 had a contrast between the reference signs AR1 and AR3.

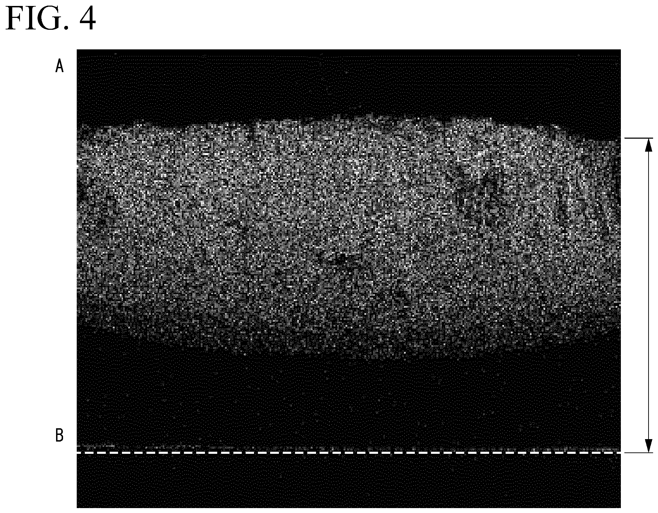

Fig. 4 is a Li mapping image obtained by TOF-SIMS in the cross section of the metal anode 3 in the thickness direction. The magnification of Fig. 4 is x700. In the figure, a range indicated by a double-headed arrow corresponds to the metal anode. A broken line shown in the figure indicates a boundary between the metal anode and a base on which the metal anode is placed in measurement.

As shown in the figure, in the cross section of the charged metal anode, the reference sign A side becomes brighter, and a large amount of Li can be observed on the reference sign A side. In addition, Li could not be detected on the reference sign B side. Moreover, when a change in the amount of Li from the reference sign A to the reference sign B side is observed, a portion where it is gradually darkened near the center of the metal anode in the thickness direction, that is, a portion where the amount of Li is gradually reduced can be observed.

From the results of the SEM observations shown in Figs.2 and 3 and the distribution of Li shown in Fig. 4, it is considered that reference sign AR1 represents a layer of an interstitial solid solution in which Li permeates between aluminum atoms, the reference sign AR2 represents a layer of a substitutional solid solution in which a part of the crystal structure of Al is substituted with Li, and the reference sign AR3 represents a layer of aluminum constituting the base material.

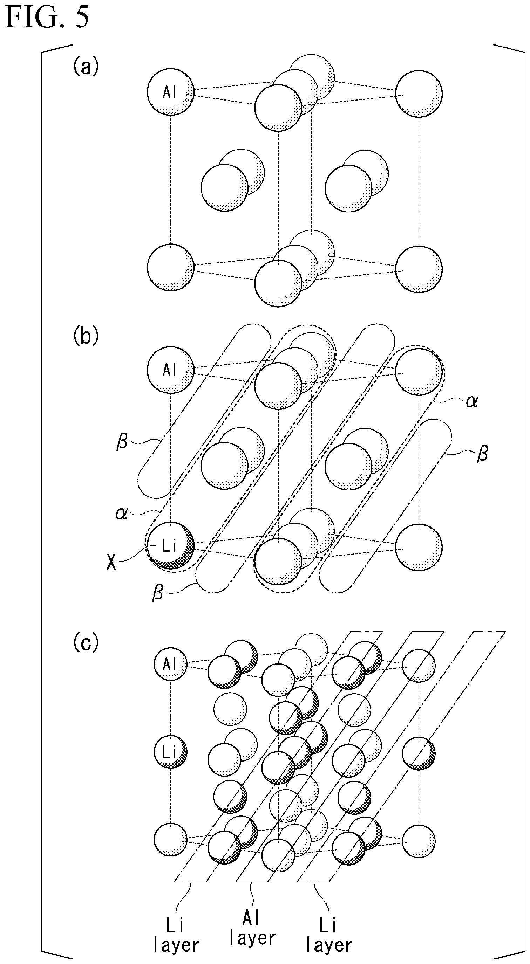

Fig. 5 is a schematic view showing a crystal structure of a metal anode.

As shown in Fig. 5(a), for example, when the base material is aluminum, the crystal structure is a face-centered cubic lattice structure. The reference sign AR3 in Figs. 2 to 4 is considered as a crystal structure shown in Fig. 5(a).

When lithium is solid-dissolved in the base material, a substitutional solid solution in which a part of aluminum atoms constituting a face-centered cubic lattice is substituted with lithium atoms is obtained as shown in Fig. 5(b). The reference sign AR2 in Figs. 2 to 4 is considered as a crystal structure shown in Fig. 5(b).

Here, in the crystal structure as shown in Fig. 5(b), it can be seen that there are layer-like gaps represented by reference sign $\beta$ between the layers of aluminum represented by reference sign $\alpha$. When the lithium secondary battery 10 is charged, the metal anode 3 is doped with lithium ions in gaps between the atoms represented by the reference sign $\beta$. As a result, it is considered as shown in Fig. 5(c) that an interstitial solid solution having aluminum atoms and lithium atoms alternately disposed in layers is formed.

Although it is assumed in the above description that the material of forming the metal anode 3 is aluminum, it can be described in the same way as in the observation of the cross section even when the material of forming the metal anode 3 is silicon, tin, and lead.

Even if charging and discharging is performed in the lithium secondary battery 10, the metallic material constituting a part of the metal anode 3 is maintained as a substitutional solid solution shown in Fig. 5(b). Specifically, the discharged metal anode 3 in the lithium secondary battery 10 has the layer of the substitutional solid solution.

The capacity of the metal anode 3 changes depending on the thickness of the metal anode 3. A thick metal anode has a relatively larger capacity than a thin metal anode. Therefore, for example, when the capacity of the cathode is constant, the metal anode 3 can adopt the following configuration. The "capacity" means the amount of lithium being doped or dedoped by the electrode (cathode or anode).

For example, when the capacity of the metal anode 3 is excessively large relative to the capacity of the cathode, that is, when the metal anode 3 is relatively thick, the layer of the substitutional solid solution in the discharged metal anode 3 is located inside the metal anode 3.

Here, the "excessively large" refers to a case where the capacity of the anode is 150% or more relative to the capacity of the cathode.

Moreover, when the capacity of the metal anode 3 is almost the same as the capacity of the cathode, that is, when the metal anode 3 is relatively thin, the layer of the substitutional solid solution in the discharged metal anode 3 is located on the surface 3b of the metal anode 3.

Here, "almost the same" refers to a case where the capacity of the anode is 100% or more and less than 150% relative to the capacity of the cathode.

In the lithium secondary battery 10, charging and discharging is performed under a condition that the layer of the substitutional solid solution contained in the metal anode 3 does not disappear.

If the lithium secondary battery 10 is discharged under a condition even the lithium atoms represented by reference sign X in Fig. 5(b) are dedoped, it is considered that the lithium secondary battery 10 is defective without substitution of aluminum again after the lithium atoms represented by the reference sign X are lost, and the face-centered cubic lattice structure is thus collapsed. It is considered that such collapse of the crystal structure occurs simultaneously and frequently in the entire metal anode 3, resulting in collapse of the metal anode 3 during discharge and damage to the metal anode 3. The damage to the metal anode 3 is actualized as, for example, cracks on the surface of the metal anode 3.

Further, the metal anode expands according to intercalation of Li and contracts according to the deintercalation of Li. In this case, when the lithium secondary battery 10 is charged and discharged under conditions such as intercalation and release of the lithium atoms represented by reference sign X in Fig. 5(b), the change in volume of the metal anode is greater than a case where the lithium secondary battery 10 is charged and discharged under a condition that the lithium atoms represented by the reference sign X in Fig. 5(b) are not dedoped. Therefore, it is considered that the stress applied to the metal anode increases due to the change in volume of the metal anode, and the metal anode is thus easily damaged.

On the other hand, since in the lithium secondary battery 10, the metal anode 3 is maintained as the substitutional solid solution shown in Fig. 5(b), the crystal structure is less likely to collapse, the stress applied to the metal anode is reduced due to the change in volume according to the charging and discharging. Therefore, the lithium secondary battery 10 is a lithium secondary battery capable of suppressing damage to the metal anode 3 as described above and having excellent cycle characteristics without using the clad material.

The "cycle characteristics" of the lithium secondary battery can be evaluated by a discharge capacity retention rate obtained by the following method.

(Method for Measuring Discharge Capacity Retention Rate)

[Manufacture of Cathode]

90 parts by mass of lithium cobalt oxide (product name: CELLSEED, manufactured by Nippon Chemical Industrial CO., LTD., average particle size (D50): 10 $\mu$m) as a cathode active material, 5 parts by mass of polyvinylidene fluoride (manufactured by Kureha Corporation) as a binder, and 5 parts by mass of acetylene black (product name: Denka Black, manufactured by Denka Company Limited) as a conductive material are mixed, and 70 parts by mass of N-methyl-2-pyrrolidone is further mixed with the mixture to prepare an electrode mixture for the cathode.

The obtained electrode mixture is coated onto an aluminum foil having a thickness of 15 $\mu$m, which is a current collector, by a doctor blade method. The coated electrode mixture is dried at 60°C for 2 hours and vacuum-dried at 150°C for 10 hours to volatilize N-methyl-2-pyrrolidone.

After a laminate of the obtained electrode mixture layer and the current collector is rolled, the laminate is cut into a disk shape of $\varphi$14 mm to manufacture a cathode, which is a laminate of a cathode mixture layer as a material for forming lithium cobalt oxide, and the current collector.

[Manufacture of Anode]

The above-described metal anode is cut out into a disk shape of φ16 mm. The thickness of the metal anode is 50 μm.

[Preparation of Electrolytic Solution]

An electrolytic solution obtained by dissolving $LiPF_6$ in a mixed solvent obtained by mixing ethylene carbonate (EC) and diethyl carbonate (DEC) in EC:DEC = 30:70 (volume ratio) to be 1 mol/L is prepared.

<Manufacture of Lithium Secondary Battery>

A polyethylene porous separator is disposed between the metal anode and the cathode described above and stored in a battery case (standard 2032), the electrolytic solution is injected thereinto to seal the battery case, thereby manufacturing a coin-type (full cell) lithium secondary battery having a diameter of 20 mm and a thickness of 3.2 mm.

[Charge/Discharge Evaluation: Initial Discharge Capacity]

The coin-type lithium secondary battery is allowed to stand at room temperature for 10 hours to sufficiently impregnate the separator and the cathode mixture layer with the electrolytic solution.
Next, initial charging and discharging is performed by charging (being doped Li to Al) to 4.2 V at a constant current of 1 mA at room temperature, constant-current/constant-voltage charging for charging at a constant voltage of 4.2 V for 5 hours, and then discharging (being dedoped Li from Al) to 3.4 V at a constant current of 1 mA.
A value obtained by measuring the discharge capacity is referred to as an "initial discharge capacity" (mAh).

[Charge/Discharge Evaluation: Discharge Capacity at 25th Cycle]

After the initial charging and discharging, charging at 1 mA and discharging at 1 mA are repeated in the same condition as in conditions of the initial charging and discharging.
A value obtained by measuring the discharge capacity refers to a "discharge capacity at 25th cycle" (mAh).
The discharge capacities in tests at first and 25th cycles are measured, and a discharge capacity retention rate is calculated by the following expression.

$$\text{Discharge capacity retention rate (\%)}$$
$$= \text{discharge capacity (mAh) at 25th cycle/initial discharge capacity (mAh)} \times 100$$

Particularly, as shown in Figs. 2 to 4, when the layer of the substitutional solid solution (reference sign X2) is sandwiched between the interstitial solid solution (reference sign X1) and a layer of the base material (reference sign X3), the layer of the substitutional solid solution (reference sign X2) can buffer the change in volume of the interstitial solid solution according to charging and discharging, and damage can be suppressed.

(Method for Manufacturing Metal Anode 3)

The metal anode 3 can be manufactured by a manufacturing method including a casting step and a foil shape processing step in order. Hereinafter, a case where the base material of the metal anode 3 is high-purity aluminum will be described by way of example.

(Casting Step)

In the casting step, a treatment for melting aluminum at about 680°C or higher and 800°C or lower and removing and purifying normally known gas or non-metal inclusions (for example, vacuum treatment of molten alloy) is performed.
The vacuum treatment is performed under conditions of, for example, 700°C or higher and 800°C or lower, 1 hour or longer and 10 hours or shorter, and a vacuum degree of 0.1 Pa or higher and 100 Pa or lower.
As a treatment for purifying aluminum, a treatment for blowing flux, inert gas, or chlorine gas into the molten aluminum can be also used. The molten aluminum purified by the vacuum treatment or the like is usually cast in a casting mold to obtain an aluminum ingot.

The casting mold is obtained by using iron or graphite heated to 50°C or higher and 200°C or lower. Aluminum is cast by a method of pouring molten aluminum at 680°C or higher and 800°C or lower into the casting mold. In addition, ingots can also be obtained by continuous casting, which is generally used.

An aluminum alloy can be obtained by adding a predetermined amount of other metal elements to be alloyed during melting in the above-described casting step.

(Foil Shape Processing Step)

The obtained aluminum ingot or aluminum alloy ingot is processed into a foil shape by subjecting to a rolling process, an extruding process, a casting process, and the like to form a metal foil.

When a plate-shaped metal anode is used, the aluminum ingot or aluminum alloy ingot may be processed into a plate shape in this step.

In the rolling process of the ingot, for example, hot rolling and cold rolling are performed to process the aluminum ingot or the aluminum alloy ingot into a foil shape.

Examples of a temperature condition for performing hot rolling include a temperature of the aluminum ingot or the aluminum alloy ingot of 350°C or higher and 450°C or lower.

In the rolling process, the material repeatedly passes between a pair of rolling rolls to finish it to have a target thickness. Passing between the pair of rolling rolls is referred to as "pass".

A working ratio r per pass (1 pass) is a thickness reduction ratio when passing through the rolling roll once, and calculated by the following expression.

$$r = (T0 - T)/T0 \times 100$$

(T0: thickness before passing through the rolling roll, T: thickness after passing through the rolling roll)

In the present embodiment, it is preferable that the aluminum ingot or the aluminum alloy ingot is repeatedly rolled under a condition of the working ratio r of 2% or more and 20% or less so as to have the target thickness.

After hot rolling and before cold rolling, a process annealing treatment may be performed.

In the process annealing treatment, for example, the hot-rolled aluminum ingot or aluminum alloy ingot may be heated to 350°C or higher and 450°C or lower, and may be allowed to cool immediately after raising the temperature.

In addition, the aluminum ingot or the aluminum alloy ingot may be heated to 350°C or higher and 450°C or lower, and allowed to cool after maintaining for about 1 hour or longer to 5 hours or shorter at the raised temperature.

By this treatment, the material of the aluminum ingot or the aluminum alloy ingot is softened to obtain a state where it is easily cold-rolled.

Cold rolling is performed, for example, at a temperature lower than a recrystallization temperature of the aluminum ingot or the aluminum alloy ingot, in general, a temperature from room temperature to 80°C or lower. In the cold rolling of one pass, the aluminum ingot is repeatedly rolled under a condition of the working ratio r of 1% or more and 10% or less so as to have the target thickness. In the following description, a plate material after the aluminum ingot or the aluminum alloy ingot has been cold-rolled is simply referred to as an "aluminum plate material".

(Pre-Doping Step)

The aluminum plate material may be pre-doped with lithium before being assembled into the lithium secondary battery. Intentionally doping lithium into an aluminum plate material before assembling it into the lithium secondary battery is referred to as "pre-doping".

When the aluminum plate material is doped with lithium and a part of the crystal lattice of an aluminum metal is substituted with lithium, the above-described substitutional solid solution is formed. Lithium incorporated into the part of the crystal lattice as such does not contribute to charging and discharging of the lithium secondary battery. Therefore, when the lithium secondary battery is assembled using the above-described aluminum plate material and then charged and discharged to dope the aluminum plate material with lithium to form the metal anode 3, the capacity of the lithium secondary battery decreases.

On the other hand, when the aluminum plate material is pre-doped, lithium consumed for forming the substitutional solid solution is not supplied from the cathode of the lithium secondary battery, and a decrease in capacity of the lithium secondary battery can be suppressed.

As the method for pre-doping the aluminum plate material with lithium, a method for attaching a lithium foil to the aluminum plate material, putting the aluminum plate material attached to the lithium foil, the separator, and the cathode into a battery case, and then injecting the electrolytic solution into the battery case is an exemplary example. By injecting the electrolytic solution into the battery case, the aluminum plate material is naturally pre-doped. Further, the lithium foil attached to the aluminum plate material is consumed and disappears due to the pre-doping.

Examples of the method for attaching the lithium foil to the aluminum plate material include a method for simultaneously rolling the aluminum plate material and the lithium foil by a roll press in an inert atmosphere or an atmosphere having a dew point temperature of -60°C.

(Cathode)

The cathode 2 has a cathode active material layer 201 and a cathode current collector 202. The cathode 2 can be manufactured by, first, adjusting a cathode mixture containing a cathode active material, a conductive material, and a binder and supporting the cathode mixture by a cathode current collector 202 to form the cathode active material layer 201.

(Cathode Active Material)

As the cathode active material contained in the cathode active material layer 201, a lithium-containing compound or another metal compound can be used. Examples of the lithium-containing compound include a lithium cobalt composite oxide having a layered structure, a lithium nickel composite oxide having a layered structure, and a lithium manganese composite oxide having a spinel structure.

Further, examples of another metal compound include oxides such as titanium oxide, vanadium oxide, or manganese dioxide, and sulfides such as titanium sulfide or molybdenum sulfide.

(Conductive Material)

As the conductive material, a carbon material can be used. As the carbon material, graphite powder, carbon black (for example, acetylene black), a fibrous carbon material, and the like are exemplary examples. Carbon black is fine and has a large surface area. Therefore, conductivity inside the cathode can be enhanced by adding a small amount of the carbon black to the cathode mixture, and a charge/discharge efficiency and output characteristics can be improved. On the other hand, when an excess amount of carbon black is added, both the binding force between the cathode mixture and the cathode current collector 202 attributed to the binder and the binding force inside the cathode mixture deteriorate, which, conversely, acts as a cause for an increase in the internal resistance.

The fraction of the conductive material in the cathode mixture is preferably 5 parts by mass or more and 20 parts by mass or less with respect to 100 parts by mass of the cathode active material. In the case of using a fibrous carbon material such as a graphitized carbon fiber or a carbon nanotube as the conductive material, it is also possible to decrease the fraction of the conductive material in the cathode mixture.

(Binder)

As the binder, a thermoplastic resin can be used. As the thermoplastic resin, fluororesins such as polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene are exemplary examples.

Two or more of these thermoplastic resins may be used in a mixture form. When a fluororesin and a polyolefin resin are used as the binder, the fraction of the fluororesin in the entire cathode mixture is set to 1 % by mass or more and 10 % by mass or less, and the fraction of the polyolefin resin is set to 0.1 % by mass or more and 2 % by mass or less, it is possible to obtain a cathode mixture having both a high adhesive force to the cathode current collector 202 and a high bonding force in the cathode mixture.

(Cathode Current Collector)

As the cathode current collector 202, a strip-shaped member formed of a metallic material such as Al, Ni, or stainless steel as a forming member can be used. Particularly, as the current collector, a molded body formed of Al and has a thin film shape is preferable since it is easy to process and inexpensive.

As the method for supporting the cathode mixture by the cathode current collector 202, a method in which the cathode mixture is formed by pressurization on the cathode current collector 202 is an exemplary example. In addition, the cathode mixture may be supported by the cathode current collector 202 by preparing a paste of the cathode mixture using an organic solvent, applying and drying the paste of the cathode mixture to be obtained on at least one surface side of the cathode current collector 202, and fixing the cathode mixture by pressing.

As the organic solvent that can be used in the case of preparing the paste of the cathode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone are exemplary examples.

As the method for applying the paste of the cathode mixture to the cathode current collector 202, a slit die coating method, a screen coating method, a curtain coating method, a knife coating method, a gravure coating method, and an electrostatic spraying method are exemplary examples.

(Separator)

As the separator 7, it is possible to use, for example, a material that is made of a material such as a polyolefin resin such as polyethylene or polypropylene, a fluororesin, or a nitrogen-containing aromatic polymer and has a form such as a porous film, a nonwoven fabric, or a woven fabric. In addition, the separator 7 may be formed using two or more of these materials or the separator 7 may be formed by laminating these materials.

The air resistance of the separator 7 according to the Gurley method defined by JIS P 8117 is preferably 50 sec/100 cc or more and 300 sec/100 cc or less and more preferably 50 sec/100 cc or more and 200 sec/100 cc or less in order to favorably permeate the electrolyte while the battery is in use (while the battery is being charged and discharged).

In addition, the porosity of the separator 7 is preferably 30 vol% or more and 80 vol% or less and more preferably 40 vol% or more and 70 vol% or less. The separator 7 may be a laminate in which separators having different porosities are laminated.

(Electrolytic Solution)

The electrolytic solution 6 contains an electrolyte and an organic solvent.

As the electrolytic solution 6 that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more of these electrolytes may be used. Among these, a mixture containing at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ that contain fluorine is preferably used as the electrolyte.

In addition, as the organic solvent that is contained in the electrolytic solution 6, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or compounds in which a fluoro group is further introduced into these organic solvent (compounds in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are still more preferable. As the mixed solvent of a cyclic carbonate and a non-cyclic carbonate, a mixed solvent containing ethylene carbonate, dimethyl carbonate, and ethyl methyl carbonate is preferable. The electrolytic solution 6 for which such a mixed solvent is used has a number of features as follows: the electrolytic solution has a broadoperating temperature range, does not easily deteriorate even when the lithium secondary battery is charged and discharged at a high current rate, does not easily deteriorate even after used for a long period of time.

In addition, as the electrolytic solution 6, it is preferable to use an electrolytic solution containing a lithium salt containing fluorine such as $LiPF_6$ and an organic solvent having a fluorine substituent in terms of enhanced safety of lithium secondary batteries to be obtained. A mixed solvent containing an ether having a fluorine substituent such as pentafluoropropyl methyl ether or 2,2,3,3-tetrafluoropropyl difluoromethyl ether and dimethyl carbonate is still more preferable since the discharge capacity retention rate is high even when the lithium secondary battery is charged and discharged at a high current rate.

In addition, as a shape of a lithium secondary battery 10, a shape that is specified by IEC60086, which is a standard for batteries specified by the International Electrotechnical Commission (IEC) or by JIS C 8500 can be adopted. Shapes such as a cylindrical shape and a square shape are exemplary examples.

Moreover, the lithium secondary battery 10 is not limited to the configuration shown in Fig. 1, and a known configuration can be adopted. For example, the lithium secondary battery 10 may have a winding-type configuration in which a band-shaped separator, a band-shaped cathode, and a band-shaped metal anode are laminated in order of the separator, the cathode, the separator, and the metal anode 3, and has a wound electrode group configured by housing in an exterior together with the electrolytic solution.

Furthermore, the lithium secondary battery 10 may have a lamination-type configuration in which the laminated structure of the cathode, the separator, the anode, and the separator is repeatedly overlaid. As the lamination-type lithium secondary battery, a so-called coin-type battery, a button-type battery, and a paper-type (or sheet-type) battery are exemplary examples.

According to the lithium secondary battery having such a configuration, the lithium secondary battery suppresses damage to the metal anode and has excellent cycle characteristics without using the clad material.

[Second Embodiment]

[Battery System]

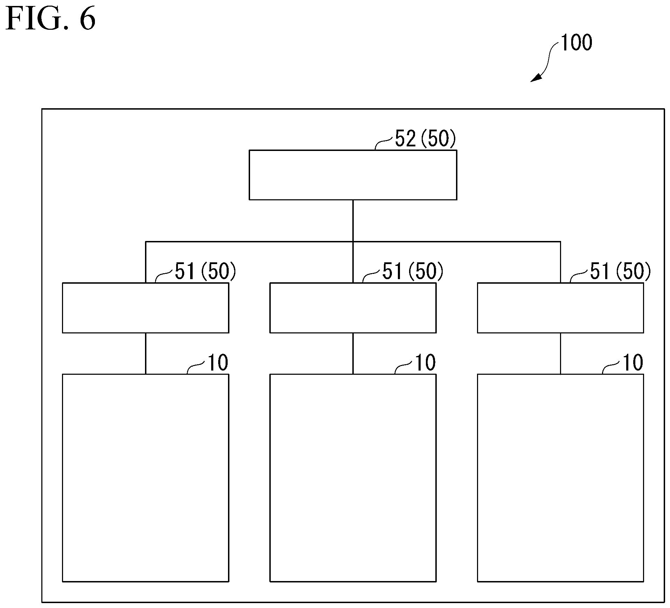

Fig. 6 is a schematic view showing a battery system according to a second embodiment.

The battery system 100 includes a lithium secondary battery unit 10 and a control unit 50 that controls charging and discharging of the lithium secondary battery unit 10.

As the lithium secondary battery unit 10, the lithium secondary battery 10 in the above-described embodiment can be adopted. Hereinafter, as an example of the battery system, a configuration will be described in which the cathode of the lithium secondary battery unit 10 contains $LiCoO_2$ as the cathode active material and a base material of the anode (metal anode) is aluminum.

The battery system 100 shown in the figure includes three lithium secondary battery units 10. The number of lithium secondary battery units 10 included in the battery system 100 can be appropriately determined according to the design.

The control unit 50 includes a cell management unit (CMU) 51 connected to the lithium secondary battery unit 10 in a one-to-one relationship, and one battery management unit (BMU) 52 connected to the CMU 51.

The CMU 51 is connected to the lithium secondary battery unit 10 via a signal line. The CMU 51 receives, for example, a voltage measured by a voltage sensor (voltage detection line) (not shown) provided at a terminal portion of the lithium secondary battery unit 10 as a signal. The CMU 51 then outputs a signal related to the voltage to the BMU 52.

The BMU 52 controls a lower limit of the operating voltage of the lithium secondary battery unit 10 to 3.4 V or more based on the signal related to the voltage of the lithium secondary battery unit 10. That is, when the operating voltage of the lithium secondary battery unit 10 falls below 3.4 V, the BMU 52 stops discharging from the lithium secondary battery unit 10.

Moreover, when the operating voltage of the lithium secondary battery unit 10 exceeds 4.2 V, the BMU 52 stops charging the lithium secondary battery unit 10 before the operating voltage exceeds 4.2 V. In this case, the control unit 50 controls the operating voltage range of the lithium secondary battery unit 10 of 3.4 V to 4.2 V.

As described above, the control unit 50 of the battery system 100 controls the lower limit of the operating voltage of the lithium secondary battery unit 10 to 3.4 V or more. As a result, the lithium secondary battery unit 10 can maintain that the metal anode 3 described above is the substitutional solid solution shown in Fig. 5B, and suppress damage to the metal anode 3.

The operating voltage is defined as a voltage at which lithium ions are not deintercalated from the substitutional solid solution of aluminum having the metal anode in the lithium secondary battery in which the base material of the metal anode is aluminum and the cathode active material of the cathode is LiCoO2. That is, in the lithium secondary battery in which the base material of the metal anode is aluminum and the cathode active material of the cathode is LiCoO2, a lower limit value of the voltage at which lithium ions are not deintercalated from the substitutional solid solution of aluminum having the metal anode is 3.4 V.

As the operating voltage, an appropriate value is set as a "voltage at which lithium ions are not deintercalated" according to the combination of the base material of the metal anode and the cathode active material of the cathode.

The "voltage at which lithium ions are not deintercalated" can be confirmed, for example, by measuring a potential change in anode by a tripolar cell using metallic lithium as a reference electrode.

As an example of the "voltage at which lithium ions are not deintercalated", a battery voltage in which the potential change in anode is controlled to be less than 0.2 V when the battery is charged to a battery voltage of 4.2 V and then discharged by the above-described tripolar cell can be an exemplary example.

According to the battery system having such a configuration, the battery system suppresses damage of the metal anode included in the lithium secondary battery unit and has good cycle characteristics.

As shown in Fig. 6, the CMU 51 is connected to each of the three lithium secondary battery units 10, and the BMU 52 is connected to the three CMUs 51, but the present invention is not limited thereto. For example, a plurality of lithium secondary battery units 10 may be connected to one CMU 51. Further, when the BMU 52 has a function of the CMU 51, the control unit 50 may be merely the BMU 52.

Moreover, the control unit 50 may be included in an electronic device or the like that is driven by electric power supplied from the lithium secondary battery unit 10. In this case, for example, the replaceable lithium secondary battery unit 10 and the control unit 50 may be separated from each other, and the lithium secondary battery unit 10 is connected to the electronic device, such that the electronic device serves as a device including the battery system 100.

As one aspect, the present invention also includes the following aspects.

(1) A lithium secondary battery including: a metal anode capable of being doped and dedoped with lithium ions;

a cathode capable of being doped and dedoped with the lithium ions; and
an electrolyte disposed between the metal anode and the cathode,
in which the metal anode has a plate shape and is composed of lithium and a base material in which lithium is solid-dissolved,
the metal anode has a layer of a substitutional solid solution and a layer of an interstitial solid solution,
the substitutional solid solution has a structure in which a part of a crystal lattice of the metal constituting the base material is substituted with the lithium,
the interstitial solid solution has a structure in which metal atoms constituting the base material and lithium atoms are alternately disposed in layers,
the layer of the substitutional solid solution is laminated with the layer of the interstitial solid solution,
the layer of the interstitial solid solution is located on a surface of the metal anode facing the cathode, and
the layer of the substitutional solid solution is a lithium secondary battery located on a surface of the metal anode opposite to the surface facing the cathode or inside the metal anode.

(2) The lithium secondary battery according to (1), in which the metal anode further has a layer of the base material,

the layer of the substitutional solid solution is sandwiched between the layer of the interstitial solid solution and the layer of the base material, and is located inside the metal anode, and
the layer of the base material is located on the surface of the metal anode opposite to the surface facing the cathode.

(3) The lithium secondary battery according to (1) or (2), in which the base material contains one or more metals selected from the group consisting of aluminum, silicon, tin, and lead.

Although the preferred embodiments of the present invention have been described above with reference to the accompanying drawings, the present invention is not limited to these examples. The shapes, combinations, and the like of each of the essential elements shown in the examples described above are examples, and can be variously changed based on the design requirements within a range that does not deviate from the scope of the present invention.

[Examples]

Hereinafter, the present invention will be described with reference to Examples, but the present invention is not limited to these Examples.

<Example 1>

[Manufacturing for Anode 1]

An aluminum metal foil used in Example 1 was manufactured by the following method. In the following description, the aluminum metal foil may be abbreviated as a "metal foil".

(Casting Step)

4,600 g of aluminum (purity: 99.99% by mass or more) was weighed. Aluminum was produced according to the above description (three-Layer electrolysis method). The purity of aluminum was calculated using an ICP optical emission spectrometer (SPS3000, manufactured by SII NanoTechnology Inc.).

Next, a molten aluminum obtained by melting aluminum was obtained.

Next, the molten aluminum was kept and purified under conditions of a temperature of 740°C for 2 hours and a vacuum degree of 50 Pa.

The molten aluminum was cast using a casting mold of cast iron (22 mm × 150 mm × 200 mm) dried at 150°C to obtain an ingot.

In order to homogenize a crystal structure of the obtained ingot, heat treatment was performed in the air at 580°C for 9 hours.

(Foil Shape Processing Step)

Rolling was performed under the following conditions. After both sides of the ingot were chamfered by 2 mm, cold rolling was performed from a thickness of 18 mm at a working ratio r of 99.6%. A thickness of the obtained metal foil was 50 $\mu$m. Aluminum having a purity of 99.99% by mass or more constituting the metal foil corresponded to the base material in the present invention.

When the aluminum metal foil was observed in cross-sectional SIM according to that described above (method of cross-sectional SIM observation), crystal grains were observed in the metal foil used in Example 1. When ther size of the crystal grains was observed for 50 crystal grains, the crystal grain size was within the range of 0.5 $\mu$m to 5 $\mu$m.

Moreover, the Vickers hardness of the metal foil was 35 HV. As the Vickers hardness, a value measured according to that described above (a Vickers hardness measuring method) was adopted.

The obtained aluminum metal foil (thickness: 50 $\mu$m) was cut into a disk shape of $\varphi$16 mm to manufacture an anode.

[Manufacture of Cathode]

90 parts by mass of lithium cobalt oxide (product name: CELLSEED, manufactured by Nippon Chemical Industrial CO., LTD., average particle size (D50): 10 $\mu$m) as a cathode active material, 5 parts by mass of polyvinylidene fluoride (manufactured by Kureha Corporation) as a binder, and 5 parts by mass of acetylene black (product name: Denka Black, manufactured by Denka Company Limited) as a conductive material were mixed, and 70 parts by mass of N-methyl-2-pyrrolidone was further mixed with the mixture to prepare an electrode mixture for the cathode.

The obtained electrode mixture was coated onto an aluminum foil having a thickness of 15 $\mu$m, which is a current collector, by a doctor blade method. The coated electrode mixture was dried at 60°C for 2 hours and vacuum-dried at 150°C for 10 hours to volatilize N-methyl-2-pyrrolidone. The coating amount of the cathode active material after drying was 21.5 mg/cm$^2$.

After a laminate of the obtained electrode mixture layer and the current collector was rolled, the laminate was cut into a disk shape of $\varphi$14 mm to manufacture a cathode, which is a laminate of a cathode mixture layer containing lithium cobalt oxide as the forming material, and the current collector.

A thickness of a cathode mixed material layer (excluding an aluminum current collector layer) after rolling was 60 to 65 $\mu$m, and an electrode density thereof was 3.0 to 3.5 g/cm$^3$.

[Preparation of Electrolytic Solution]

An electrolytic solution obtained by dissolving LiPF$_6$ in a mixed solvent obtained by mixing ethylene carbonate (EC) and diethyl carbonate (DEC) in EC:DEC = 30:70 (volume ratio) to be 1 mol/L was prepared.

<Manufacture of Lithium Secondary Battery>

A polyethylene porous separator was disposed between the anode and the cathode described above and stored in a battery case (standard 2032), the electrolytic solution was injected thereinto to seal the battery case, thereby manufacturing a coin-type (full cell) lithium secondary battery having a diameter of 20 mm and a thickness of 3.2 mm.

[Charge/Discharge Evaluation: Initial Discharge Capacity]

The coin-type lithium secondary battery was allowed to stand at room temperature for 10 hours to sufficiently impregnate the separator and the cathode mixture layer with the electrolytic solution.

Next, initial charging and discharging was performed by charging (being doped Li to Al) to 4.2 V at a constant current of 1 mA at room temperature, constant-current/constant-voltage charging for charging at a constant voltage of 4.2 V for 5 hours, and then discharging (being dedoped Li from Al) to 3.4 V at a constant current of 1 mA.

A value obtained by measuring the discharge capacity was referred to as an "initial discharge capacity" (mAh).

The above-described lithium secondary battery was separately prepared, and after the above-described constant-current/constant-voltage charging, the lithium secondary battery was disassembled and the initially charged metal anode was taken out therefrom. The taken-out metal anode was subjected to cross-sectional SEM observation and TOF-SIMS observation under the following conditions.

(Cross-Sectional SEM Observation)

The cross-sectional SEM observation was performed according to that described above (method of cross-sectional SEM observation, method for observing metal distribution state).

The conditions for preparing the cross section were the same as those for preparing the cross section during the cross-sectional SIM observation, and the prepared cross section was adjusted to be the same as that during the cross-sectional SIM observation.

(TOF-SIMS Observation)

TOF-SIMS was performed according to that described above (TOF-SIMS method).

As a result of the observation, it was confirmed that the taken-out metal anode has a three-layered structure in which a layer of the interstitial solid solution of Li having a large amount of Li, a layer of the substitutional solid solution in which a part of the crystal structure of Al with Al as a base material is substituted with Li, and an Al layer in which Li is not detected are laminated from the cathode side.

[Charge/Discharge Evaluation: Discharge Capacity at 25th Cycle]

After the initial charging and discharging, charging at 1 mA and discharging at 1 mA were repeated in the same manner as in conditions of the initial charging and discharging.

A value obtained by measuring the discharge capacity was referred to as a "discharge capacity at 25th cycle" (mAh).

The discharge capacities in tests at first and 25th cycles were measured, and a discharge capacity retention rate was calculated by the following expression.

Discharge capacity retention rate (%)

= discharge capacity (mAh) at 25th cycle/initial discharge capacity (mAh) x 100

In Example 1, the discharge capacity retention rate calculated by the above method was 90%.

<Comparative Example 1>

A charge/discharge evaluation was performed by the same method as in Example 1, except for discharging to 3.0 V in the charge/discharge evaluation.

In Comparative Example 1, the discharge capacity retention rate calculated by the above method was 10%.

The lithium secondary battery discharged under the discharge condition of Example 1 and the lithium secondary battery discharged under the discharge condition of Comparative Example 1 were each disassembled, and a back surface of the metal anode was observed. The back surface refers to a surface of the metal anode opposite to the surface facing the cathode, and corresponds to the surface 3b in Fig. 1.

As a result of the observation, the back surface of the metal anode taken out from the lithium secondary battery of Example 1 had no cracks and showed metallic luster. The metallic luster is attributed to metal aluminum.

It is considered that since the discharge condition of Example 1 is a condition that the layer of the substitutional solid solution in the metal anode is maintained, the layer of the substitutional solid solution buffers a change in volume of the interstitial solid solution according to charging and discharging, and damage is suppressed. That is, in Example 1, it can be seen that the discharged metal anode has a layer of the substitutional solid solution.

On the other hand, the back surface of the metal anode taken out from the lithium secondary battery of Comparative Example 1 had many cracks and lost metallic luster.

It is considered that since the discharge condition of Comparative Example 1 is a condition that the layer of the substitutional solid solution in the metal anode is not maintained, the layer of the substitutional solid solution cannot buffer the change in volume of the interstitial solid solution according to charging and discharging, and the metal anode is damaged. That is, in Comparative Example 1, it is considered that the discharged metal anode does not have the layer of the substitutional solid solution.

Moreover, it was found from the results that in the metal anode taken out from the lithium secondary battery of Example 1, the back surface of the metal anode is formed of a metal aluminum and exhibits a function as a current collector. On the other hand, it was found that the metal anode taken out from the lithium secondary battery of Comparative Example 1 had a reduced current collecting function as a whole.

<Example 2>

4,500 g of high-purity aluminum (purity: 99.99% by mass or more) and 45 g of silicon manufactured by Kojundo Chemical Lab Co., Ltd. (purity: 99.999% by mass or more) were mixed, and the mixture was heated to 760°C and held at 760°C to obtain a molten Al-Si alloy having silicon contained in an amount of 1.0% by mass.

The metal foil of Example 2 was obtained in the same manner as in Example 1, except that the obtained molten metal was used. The Al-Si alloy constituting the metal foil corresponds to the base material in the present invention.

When 50 metal foils obtained were observed by the cross-sectional SIM, crystal grain sizes thereof in vertical and horizontal directions were within a range of 0.5 $\mu$m to 5 $\mu$m. In addition, the Vickers hardness of the metal foil was 40 HV. The vertical direction is a vertical direction in a rectangular field of view observed by the cross-sectional SIM, and the horizontal direction is a direction orthogonal to the vertical direction in the same field of view.

The lithium secondary battery of Example 2 was manufactured in the same manner as in Example 1, except that the obtained metal foil was used.

The obtained lithium secondary battery was evaluated for charging and discharging under the same conditions as in Example 1.

The back surface of the metal anode taken out from the lithium secondary battery of Example 2 had no cracks and showed metallic luster. It is considered that similar to Example 1, since the discharge condition of Example 2 is a condition that the layer of the substitutional solid solution in the metal anode is maintained, the layer of the substitutional solid solution buffers a change in volume of the interstitial solid solution according to charging and discharging, and damage is suppressed. That is, in Example 2, it can be seen that the metal anode in the discharged state has the layer of the substitutional solid solution.

In Example 2, the discharge capacity retention rate at the 50th cycle calculated by the above method was 98%. In addition, the discharge capacity retention rate in the 100th cycle was 90%.

From the above results, it was found that the present invention is useful.

[Reference Signs List]

2: Cathode
3: Metal anode
3a: Surface facing cathode
3b: Surface opposite to surface facing cathode
10: Lithium secondary battery, lithium secondary battery unit
50: Control unit
100: Battery system

**Claims**

1. A lithium secondary battery comprising:

    a metal anode capable of being doped and dedoped with lithium ions;
    a cathode capable of being doped and dedoped with the lithium ions; and
    an electrolyte disposed between the metal anode and the cathode,
    wherein the metal anode has a plate shape, and is composed of lithium and a base material in which the lithium is solid-dissolved,
    the metal anode in a discharged state has a layer of a substitutional solid solution,
    the substitutional solid solution has a structure in which a part of a crystal lattice of a metal constituting the base material is substituted with the lithium, and
    the layer is located on a surface of the metal anode opposite to a surface facing the cathode or inside the metal anode.

2. The lithium secondary battery according to Claim 1,
   wherein the base material contains one or more metals selected from the group consisting of aluminum, silicon, tin, and lead.

3. A battery system comprising:

   a lithium secondary battery unit; and
   a control unit,
   wherein the lithium secondary battery unit includes
   a metal anode capable of being doped and dedoped with lithium ions,
   a cathode capable of being doped and dedoped with the lithium ions, and
   an electrolyte disposed between the metal anode and the cathode,
   the metal anode has a plate shape, and is composed of lithium and a base material in which the lithium is solid-dissolved,
   the metal anode in a discharged state has a layer of a substitutional solid solution,
   the substitutional solid solution has a structure in which a part of a crystal lattice of a metal constituting the base material is substituted with the lithium, and
   the control unit controls an operating voltage of the lithium secondary battery unit to be a voltage at which the lithium ions are not deintercalated from the substitutional solid solution.

4. The battery system according to Claim 3,
   wherein the base material contains one or more metals selected from the group consisting of aluminum, silicon, tin, and lead.

FIG. 1

## FIG. 2

## FIG. 3

FIG. 4

A

B

FIG. 5

FIG. 6

| | | |
|---|---|---|
| **INTERNATIONAL SEARCH REPORT** | | International application No. |
| | | PCT/JP2020/047004 |

| A. CLASSIFICATION OF SUBJECT MATTER |
|---|
| H01M 4/38(2006.01)i; H01M 10/0525(2010.01)i; H01M 10/44(2006.01)i |
| FI: H01M4/38 Z; H01M10/0525; H01M10/44 P |
| According to International Patent Classification (IPC) or to both national classification and IPC |

| B. FIELDS SEARCHED |
|---|
| Minimum documentation searched (classification system followed by classification symbols) |
| H01M4/38; H01M10/0525; H01M10/44 |

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

| Electronic data base consulted during the international search (name of data base and, where practicable, search terms used) |
|---|
| JSTPlus (JDreamIII) |

| C. DOCUMENTS CONSIDERED TO BE RELEVANT | | |
|---|---|---|
| Category* | Citation of document, with indication, where appropriate, of the relevant passages | Relevant to claim No. |
| X | JP 4-253159 A (MITSUI MINING & SMELTING CO., LTD.) 08 September 1992 (1992-09-08) paragraphs [0010]-[0013] | 1-2 |
| A | paragraphs [0010]-[0013] | 3-4 |
| A | 小島 陽, Al-Li 系合金, 軽金属, 1989, vol. 39, no. 1, pp. 67-80, fig. 1, tables 1-2, (KOJIMA, Yo, "Aluminum-Lithium alloys", Journal of Japan Institute of Light Metals) | 1-4 |
| A | JP 61-193361 A (SANYO ELECTRIC CO., LTD.) 27 August 1986 (1986-08-27) claims, example (F) | 1-4 |
| A | LUPU, C. et al, "X-ray and Neutron Diffraction Studies on 'Li4.4Sn'", Inorganic Chemistry, 21 May 2003, vol. 42, no. 12, pp. 3765-3771, fig. 1-7 | 1-4 |

☒ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 February 2021 (24.02.2021) | 16 March 2021 (16.03.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

| | International application No. |
|---|---|
| | PCT/JP2020/047004 |

C (Continuation).    DOCUMENTS CONSIDERED TO BE RELEVANT

| Category* | Citation of document, with indication, where appropriate, of the relevant passages | Relevant to claim No. |
|---|---|---|
| A | NAZER, N. S. et al, "Nanostructured magnesium silicide Mg2Si and its electrochemical performance as an anode of a lithium ion battery", Journal of Alloys and Compounds, 17 May 2017, vol. 718, pp. 478-491, abstract, fig. 11 | 1-4 |
| A | LEITE, M. S. et al, "Insights into capacity loss mechanisms of all-solid-state Li-ion batteries with Al anodes", Journal of Materials Chemistry A, 28 December 2014, vol. 2, no. 48, pp. 20552-20559, fig. 1-6 | 1-4 |
| P, X | CN 110797524 A (NINGBO ZHIQING CELLS CO., LTD.) 14 February 2020 (2020-02-14) paragraphs [0063]-[0069] | 1-2 |

Form PCT/ISA/210 (continuation of second sheet) (January 2015)

| INTERNATIONAL SEARCH REPORT | | International application No. | |
|---|---|---|---|
| Information on patent family members | | PCT/JP2020/047004 | |

| Patent Documents referred in the Report | Publication Date | Patent Family | Publication Date |
|---|---|---|---|
| JP 4-253159 A | 08 Sep. 1992 | (Family: none) | |
| JP 61-193361 A | 27 Aug. 1986 | (Family: none) | |
| CN 110797524 A | 14 Feb. 2020 | (Family: none) | |

Form PCT/ISA/210 (patent family annex) (January 2015)

**EP 4 080 611 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019229604 A
- JP 2017195028 A